# EUROPEAN PATENT SPECIFICATION

(11) **EP 3 479 885 B1**
(45) Date of publication and mention of the grant of the patent: **15.07.2020**
(21) Application number: 17819586.3
(22) Date of filing: 29.03.2017
(51) Int. Cl.: A63H 33/08, A63H 11/00, G06F 11/36

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS, ET PROGRAMME

(30) Priority: 30.06.2016 JP 2016129857
(43) Date of publication of application: 08.05.2019
(73) Proprietor: Sony Corporation, Tokyo 108-0075 (JP)
(72) Inventor: ISOZU, Masaaki, Tokyo 141-0022 (JP)
(74) Representative: MFG Patentanwälte Meyer-Wildhagen Meggle-Freund Gerhard PartG mbB
(86) International application number: PCT/JP2017/013071
(87) International publication number: WO 2018/003217

(56) References cited:
- WO-A1-2015/173246
- JP-A- 2001 310 283
- JP-A- 2001 310 283
- JP-A- 2007 190 374
- JP-A- 2011 500 116
- US-A1- 2002 138 175
- "Studuino Katsuyo no Tameno RT Component-gun StarTno no Kaihatsu", Conference on Robotics and Mechatronics 2016 Koenkai Ronbunshu, 8 June 2016 (2016-06-08), XP9511031,

## Description

### Technical Field

The present disclosure relates to an information processing apparatus, an information processing method, and a program.

### Background Art

Toy blocks, which are assembled into objects having various shapes, have been popular for years. In recent years, robot creation has been carried out by using electronic components, such as a sensor, a motor, a control unit, and a battery. A created robot is controlled by an application installed on the control unit.

For example, Patent Literature 1 described below discloses, as a technique for adding an application to an electronic device, a software installation method for additionally installing an additional functional module on an application body that has already been installed on the electronic device. Specifically, additional installation of an additional functional module on an application body of an electronic device is allowed only in the case where the production number of the electronic device read from the electronic device when the additional functional module is additionally installed on the electronic device is searched and found in a list of production numbers obtained by decryption of a list of encrypted production numbers. Here, the electronic device described in Patent Literature 1 is assumed to be any device that performs a predetermined operation in response to a program executed by a computer, such as a host computer, a measurement instrument, an industrial robot, a sewing machine, and an image processing device.

Patent Literature 2 discloses a robotic system, a robot apparatus, and a control method for them, that are designed such that behaviors suitable for a robot are embodied based on information distributed by information distribution means. Also, in a robotic system, robot apparatus, and a control method for them, it is designed based on information distributed by the information distribution means such that a robot is prohibited from embodying corresponding behaviors out of the behaviors the robot could embody, or that prohibition on the robot embodying corresponding behaviors is withdrawn. Furthermore, in an information processing device and its method, control data for a robot to generate behaviors can be modified to meet the robot and/or the user of the robot.

### Citation List

### Patent Literature

Patent Literature 1: JP 2006-146835 A
Patent Literature 2: US 2002/138175 A1

### Disclosure of Invention

### Technical Problem

However, how the created robot moves for each application is unknown until the application actually installed on the robot is executed. In addition, in the case where there is a problem in the robot motion in response to actual execution of the application or in the case where the robot motion is different from an expected motion, it takes time and effort to reinstall the application.

Here, the present disclosure is directed to an information processing apparatus, an information processing method, and a program that enable the user to recognize in advance how the created robot moves for each application.

### Solution to Problem

According to the present disclosure, there is proposed an information processing apparatus including a control unit that generates robot display information for displaying information related to a robot to be created by assembly of a plurality of parts, selects a plurality of programs installable on the robot, generates motion display information for displaying information related to motion of the robot in a case of installation of the plurality of programs on the robot, and performs control such that the motion display information is output.

According to the present disclosure, there is proposed an information processing method including, by a processor: generating robot display information for displaying information related to a robot to be created by assembly of a plurality of parts; selecting a plurality of programs installable on the robot; generating motion display information for displaying information related to motion of the robot in a case of installation of the plurality of programs on the robot; and performing control such that the motion display information is output.

According to the present disclosure, there is proposed a program according to claim 15.

### Advantageous Effects of Invention

According to the present disclosure as described above, the user can recognize in advance how a created robot moves for each application.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram illustrating an overview of an information processing system according to an embodiment of the present disclosure.
[FIG. 2] FIG. 2 is a block diagram of an example configuration of a client terminal according to an embodiment of the present disclosure.
[FIG. 3] FIG. 3 is a block diagram of an example configuration of a server according to an embodiment of the present disclosure.
[FIG. 4] FIG. 4 is a flowchart of general operation processing according to an embodiment of the present disclosure.
[FIG. 5] FIG. 5 is a flowchart of parts purchase processing according to an embodiment of the present disclosure.
[FIG. 6] FIG. 6 is a flowchart of assembly display processing according to an embodiment of the present disclosure.
[FIG. 7] FIG. 7 is a view of an example display screen showing creatable robots presented in accordance with information regarding user-owned parts according to an embodiment of the present disclosure.
[FIG. 8] FIG. 8 is a view of an example display screen showing robots that are creatable with addition of some parts and presented in accordance with information regarding user-owned parts according to an embodiment of the present disclosure.
[FIG. 9] FIG. 9 is a view of an example display screen showing information related to parts for use in a selected robot according to an embodiment of the present disclosure.
[FIG. 10] FIG. 10 is a view of an example display screen showing a recommended robot that is presented in accordance with information regarding user-owned parts according to an embodiment of the present disclosure.
[FIG. 11] FIG. 11 is a view of an example of a grouping display screen showing information related to a robot recipe according to an embodiment of the present disclosure.
[FIG. 12] FIG. 12 is a view of an example display screen showing a robot assembly description image according to an embodiment of the present disclosure.
[FIG. 13] FIG. 13 is a view of an example screen display for program installation according to an embodiment of the present disclosure.
[FIG. 14] FIG. 14 is a view of an example screen display for programming according to an embodiment of the present disclosure.

### Modes for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Here, description will be given in the following order.
1. Overview of Information Processing Apparatus according to Embodiment of Present Disclosure
2. Configuration
   2-1. Configuration of Client Terminal
   2-2. Configuration of Server
3. Operation Processing
   3-1. General Operation Processing
   3-2. Parts Purchase Processing
   3-3. Assembly Display Processing
4. Example of Display Screen
   4-1. Example of Related Robot Display Screen
   4-2. Example of Assembly Procedure Screen
   4-3. Example of Program Installation Screen
5. Conclusion

### << 1. Overview of Information Processing System according to Embodiment of Present Disclosure>>

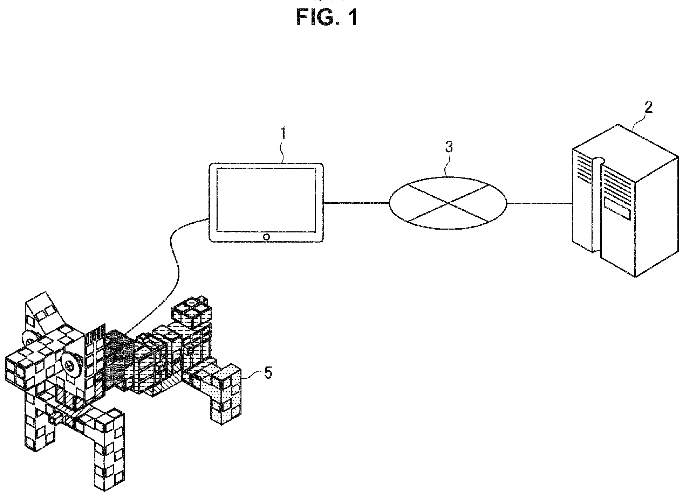

An overview of an information processing system according to an embodiment of the present disclosure will be described with reference to FIG. 1. The information processing system according to the embodiment includes a client terminal 1 and a server 2. The client terminal 1 is connected to the server 2 via a network 3 to make transmission and reception of data. Moreover, the client terminal 1 enables a program to be installed on the robot 5. The robot 5 is created by assembly of a plurality of parts.

In this embodiment, the parts used for robot creation (the parts that constitute the robot) include electronic parts, such as a motor, sensors, and cables, as well as blocks. The blocks are color blocks including various polyhedra or spheres (e.g., seven polyhedra or spheres) having recesses and protrusions for mating with other blocks. The blocks may have opaque colors or light-transmissive colors. The surfaces of the blocks may be finished with various treatments in consideration of the touch of the user. Examples of expected electronic parts to be installed in the robot include, in addition to the motor, sensors, and cables described above, a battery, a buzzer, a speaker, a display, and a control unit. Examples of possible sensors include a touch sensor, a proximity sensor, an acceleration sensor, an angular rate sensor, a magnetic field sensor, an illuminance sensor, a temperature sensor, an atmospheric pressure sensor, living body sensors (capable of detecting user's living body information, such as pulse, perspiration, electroencephalogram, tactile sense, olfactory sense, and gustatory sense), a location detector (a global navigation satellite system (GNSS) receiver), a camera, and a microphone.

Here, as described above, how the created robot moves for each application is unknown until the application actually installed on the robot is executed. In addition, in the case where there is a problem in the robot motion in response to actual execution of the application or in the case where the robot motion is different from an expected motion, it takes time and effort to reinstall the application.

Here, in the present disclosure, the user can recognize in advance how the created robot moves for each application.

Specifically, a moving image or static image showing the motion of the robot 5 in the case of installation of each of plural programs that can be installed on the robot 5 from the server 2 is transmitted and displayed on the client terminal 1. The user determines which program is installed with reference to the displayed moving image or static image and connects the robot 5 with the client terminal 1to install the selected program.

Accordingly, the user can check in advance the motion of the robot 5 in response to the installed program through the client terminal 1. As a result, the time and effort for reinstallation can be eliminated.

Hereinafter, the configurations of the client terminal 1 and the server 2 in the information processing system according to the embodiment of the present disclosure will be described in detail with reference to the drawings.

### <<2. Configuration>>

### <2-1. Configuration of Client Terminal>

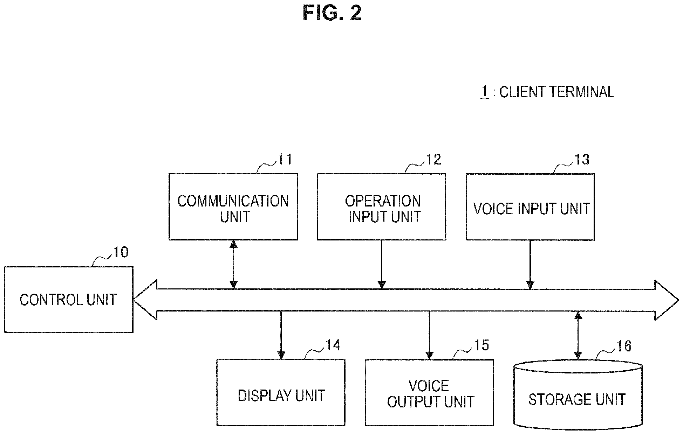

FIG. 2 is a block diagram of an example configuration of a client terminal 1 according to an embodiment. The client terminal 1 may be a tablet terminal as illustrated in FIG. 1 or may be a smart phone, a mobile phone terminal, a notebook PC, or a desktop PC, a head mounted display (HMD), or the like. As illustrated in FIG. 2, the client terminal 1 includes a control unit 10, a communication unit 11, an operation input unit 12, a voice input unit 13, a display unit 14, a voice output unit 15, and a storage unit 16.

The control unit 10 functions as an operation processing device and a control device and controls the overall operation in the client terminal 1 according to various programs. The control unit 10 is achieved by an electronic circuit, such as a central processing unit (CPU) or a microprocessor. Furthermore, the control unit 10 may include a read only memory (ROM), which stores programs and operation parameters used and the like, and a random access memory (RAM), which temporarily stores parameters that change appropriately and the like.

The control unit 10 according to this embodiment controls such that the information regarding user-owned parts is transmitted from the communication unit 11 to the server 2. The information regarding user-owned parts includes the type and number of parts. The information regarding user-owned parts may be created on the basis of the parts purchase history of the user at the on-line store, or may be created on the basis of the image analysis results of the captured image obtained by capturing the actually purchased parts. Alternatively, the information regarding user-owned parts may be created on the basis of the input data that are manually input by the user and that include the serial number of a set of parts purchased by the user and the name of each of the parts and the number of the parts. The control unit 10 may create information regarding user-owned parts and transmit the created information to the server 2 or may transmit the parts purchase history or the captured image obtained by capturing the parts directly to the server 2 as information regarding user-owned parts.

Moreover, on the basis of the robot display information for displaying the information related to the robot to be created by assembly of parts (hereinafter, the information may also be referred to as robot-related information), the control unit 10 causes the display unit 14 to display the robot-related information. The robot display information has been received by the communication unit 11 from the server 2.

The communication unit 11 is a communication module for wired/wireless transmission and reception of data to/from another device. The communication unit 11 communicates with an external device directly or wirelessly via a network access point by means of wired local area network (LAN), wireless LAN, Wi-Fi (registered trademark), infrared communication, Bluetooth (registered trademark), near-field/contactless communication, or the like.

The communication unit 11 according to this embodiment is connected to the server 2 via, for example, the network 3 to make transmission and reception of data. Moreover, the communication unit 11 may be connected to the robot 5 in a wired/wireless manner to make transmission and reception of data.

The operation input unit 12 receives an operation instruction from the user and outputs the operation content to the control unit 10. The operation input unit 12 may be a touch sensor, a pressure sensor, or a proximity sensor that is integrated with the display unit 14. Alternatively, the operation input unit 12 may be a physical structure, such as a button, a switch, or a lever, separate from the display unit 14.

The voice input unit 13 includes a microphone, a microphone amplifier, which amplifies voice signals from the microphone, and an A/D converter, which converts voice signals into digital signals. The voice input unit 13 outputs the voice signals to the control unit 10.

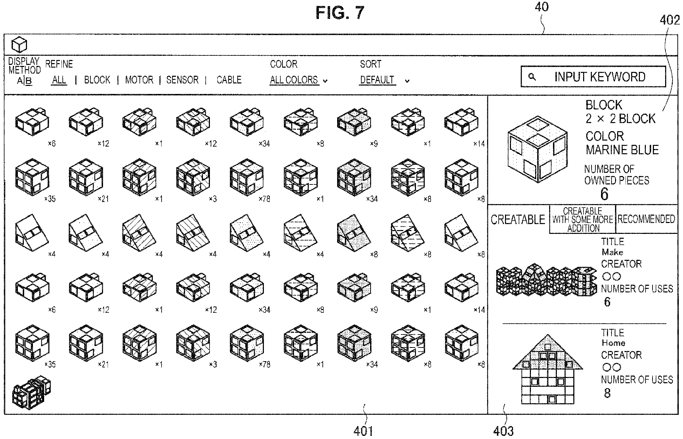

The display unit 14 is, for example, a display device that outputs a display screen showing the robot-related information. The display unit 14 may be a display device, such as a liquid crystal display (LCD) or an organic electroluminescence (EL) display. Note that example display screens displayed on the display unit 14 will be described below with reference to FIG. 7 to FIG. 14.

The voice output unit 15 includes a speaker, which plays voice signals, and an amplifier circuit for the speaker.

The storage unit 16 stores programs and parameters for causing the control unit 10 to perform each function. Moreover, the storage unit 16 is a storage device including a storage medium, a recorder configured to cause data to be stored on the storage medium, a reader configured to read data from the storage medium, a deleter configured to delete data recorded in the storage medium, and the like. Examples of the storage unit 16 may include non-volatile memories, such as a flash ROM (or flash memory), an electrically erasable programmable read-only memory (EEPROM), and an erasable programmable ROM (EPROM); magnetic disks, such as a hard disk or a round magnetic disk; optical discs, such as a compact disc (CD), a digital versatile disc recordable (DVD-R), and Blu-ray Disc (BD) (registered trademark); and storage media, such as a magneto optical (MO) disc.

### <2-2. Configuration of Server>

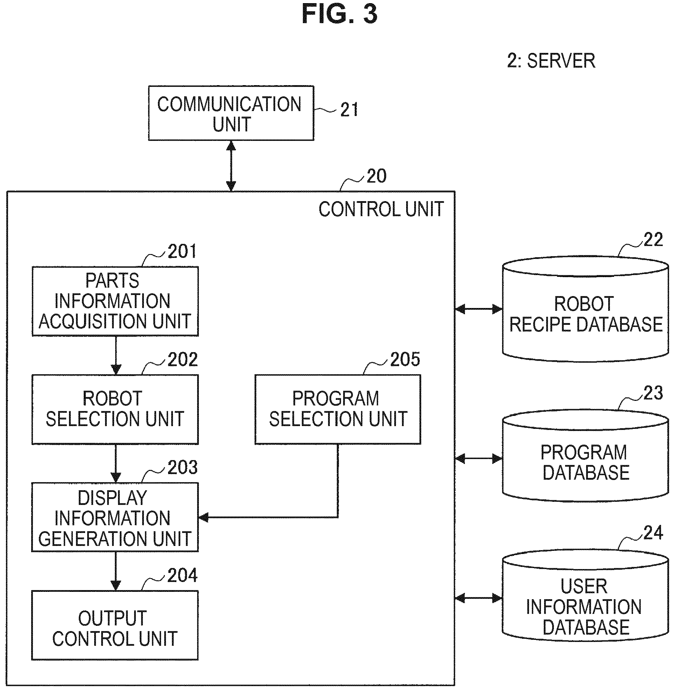

FIG. 3 is a block diagram of an example configuration of a server according to this embodiment. As illustrated in FIG. 3, the server 2 includes a control unit 20, a communication unit 21, a robot recipe database 22, a program database 23, and a user information database 24.

### (Control Unit 20)

The control unit 20 functions as an operation processing device and a control device and controls the overall operation in the server 2 according to various programs. The control unit 20 is achieved by an electronic circuit, such as a CPU or a microprocessor. Furthermore, the control unit 20 may include a ROM, which stores programs and operation parameters used and the like, and a RAM, which temporarily stores parameters that change appropriately and the like.

Moreover, the control unit 20 according to this embodiment functions as a parts information acquisition unit 201, a robot selection unit 202, a display information generation unit 203, an output control unit 204, and a program selection unit 205.

The parts information acquisition unit 201 acquires information regarding user-owned parts. For example, the parts information acquisition unit 201 acquires information regarding user-owned parts on the basis of the data (parts information, parts purchase history, and captured parts image) received by the communication unit 21 from the client terminal 1. The parts information acquisition unit 201 causes the acquired parts information to be stored (registered) in the user information database 24 in association with the user ID.

The robot selection unit 202 selects robot candidates to be presented to the user on the basis of the information regarding user-owned parts acquired by the parts information acquisition unit 201. For example, the robot selection unit 202 selects a robot that is creatable only with the user-owned parts, a robot having a structure similar to the structure that is creatable only with the user-owned parts, or a robot recommended to the user. The type and number of parts that constitute each robot (i.e., constituent parts information) are included in each recipe information stored in the robot recipe database 22. The robot selection unit 202 selects a suitable robot on the basis of the information related to the parts that constitute each robot and the information regarding user-owned parts. In addition, the robot selection unit 202 selects a recommended robot on the basis of, for example, the information regarding the robots created by the user in the past (the type and intended use of the controlled robots).

The display information generation unit 203 generates information to be presented to the user, that is, information to be displayed on the client terminal 1 and outputs the information to the output control unit 204. The display information generation unit 203 generates, for example, the following information.

### • Robot-Related Information

The display information generation unit 203 generates robot display information for displaying information related to the robot to be presented to the user (robot-related information). The robot-related information includes information regarding the title of robot, the robot complete image, the creator (i.e., designer), the number of users, and the like. The robot-related information is generated on the basis of the recipe information stored in the robot recipe database 22. Moreover, the robot-related information includes information regarding the type, number, and price of parts additionally needed (that is, missing parts) for robot creation, and the like. The robot-related information is generated on the basis of the constituent parts information included in the recipe information and the information regarding user-owned parts.

### • Assembly Display Information

The display information generation unit 203 generates assembly display information for displaying the procedure for assembling the user-selected robot. The assembly procedure includes the parts assembly method and order (in chronological order). The assembly procedure is generated on the basis of the recipe information stored in the robot recipe database 22.

### • Motion Information

The display information generation unit 203 generates motion display information for displaying information (motion information) related to robot motion obtained in the case of installation of a program on the robot created by the user. The motion information includes a static image or moving image of robot motion. In addition, the motion information includes a static image or moving image of a characteristic motion of the robot on which the program has been installed. The image of a characteristic motion is, for example, a static image of a dog robot with a raised paw or a moving image of a dog robot raising a paw in the case of dog robots; a static image of a sitting dog robot or a moving image of a dog robot sitting down in the case of dog robots that can take a sitting posture; or an image of the most characteristic motion, such as jumping, in the case of active dog robots on which programs that cause a plurality of motions (e.g., walking, running, and jumping) have been installed.

The output control unit 204 controls such that the display information generated in the display information generation unit 203 is transmitted (outputted) to the client terminal 1 via the communication unit 21. In addition, the output control unit 204 can also control such that a predetermined program is transmitted (outputted) to the client terminal 1.

The program selection unit 205 selects, from the program database 23, programs installable on the robot created by the user, and outputs the installable programs to the display information generation unit 203. The display information generation unit 203 generates the motion display information, as described above, on the basis of information regarding the programs selected by the program selection unit 205.

### (Communication Unit 21)

The communication unit 21 is a communication module for wired/wireless transmission and reception of data to/from another device. The communication unit 21 according to this embodiment is connected to the client terminal 1 via the network 3 to make transmission and reception of data. Specifically, the communication unit 21 receives, from the client terminal 1, the information regarding user-owned parts and the signals of operation instruction from the user. In addition, the communication unit 21 transmits the display information and programs for displaying robot-related information, motion information, and the like, to the client terminal 1 in accordance with the control of the control unit 20.

### (Robot Recipe Database 22)

The robot recipe database 22 is a storage medium that stores information related to robot assembly (referred to as recipe information in the present specification). The recipe information stored in the robot recipe database 22 includes information regarding the title of robot, the robot complete image, the creator, the number of users, the type and number of parts used, the assembly procedure (in chronological order of parts), and the like. In addition, the recipe information previously created by the producer and the recipe information created and posted by a general user may also be registered in the robot recipe database 22.

### (Program Database 23)

The program database 23 is a storage medium that stores information regarding programs that control robot motion. The information regarding the programs that control robot motion includes information regarding program sources, title, moving images or static images indicating the characteristics of robot motion, and robots on which the programs can be installed.

### (User Information Database 24)

The user information database 24 is a storage medium that stores user-related information, such as user ID, owned parts information, purchase history, and robot creation history.

### <<3. Operation Processing>>

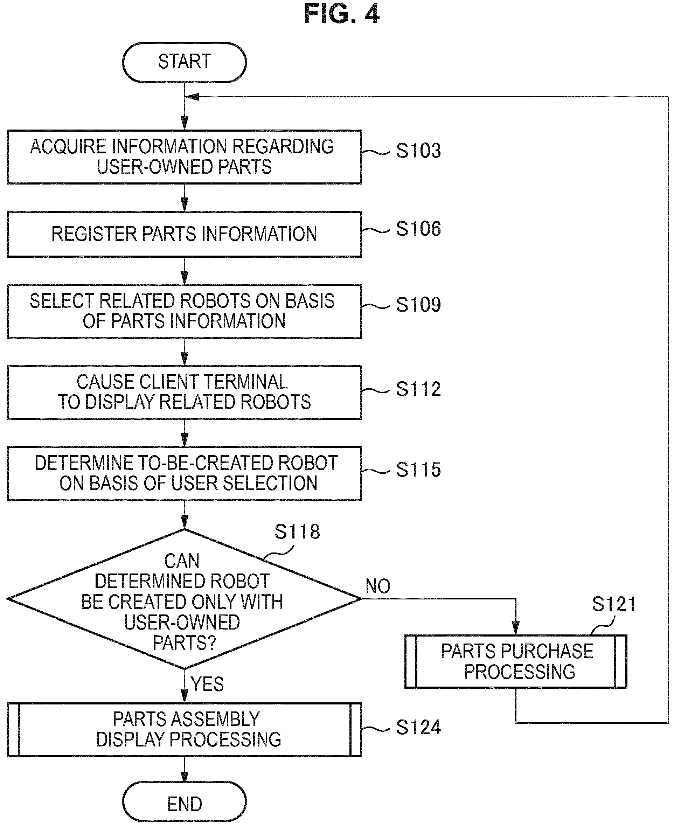

Next, the operation processing of the information processing system according to this embodiment will be described with reference to FIG. 4 to FIG. 6.

### <3-1. General Operation Processing>

FIG. 4 is a flowchart of general operation processing according to this embodiment. As illustrated in FIG. 4, the parts information acquisition unit 201 in the server 2 acquires information regarding user-owned parts at first (Step S103).

Next, the parts information acquisition unit 201 stores and registers the information regarding user-owned parts in the user information database 24 (Step S106).

Subsequently, the robot selection unit 202 selects related robots on the basis of the parts information (Step S109). For example, the robot selection unit 202 selects a plurality of robots (i.e., robot candidates to be created), such as robots composed only of the user-owned parts and robots having a parts constitution similar to the constitution of the user-owned parts, on the basis of the information regarding user-owned parts, or recommended robots on the basis of the creation history of the user or the like.

Next, the control unit 20 causes the client terminal 1 to display the related robots selected by the robot selection unit 202 (Step S112). Specifically, the control unit 20 controls such that the display information generation unit 203 generates display information on the basis of information regarding the recipes for the robots selected by the robot selection unit 202 and that the output control unit 204 transmits the display information to the client terminal 1 via the communication unit 21. In the client terminal 1, the display unit 14 displays the related robots and receives user selection. Examples of the display of the related robots on the client terminal 1 will be described below with reference to FIG. 7 to FIG. 10.

Subsequently, the robot selection unit 202 determines which robot is to be created on the basis of the user selection (Step S115).

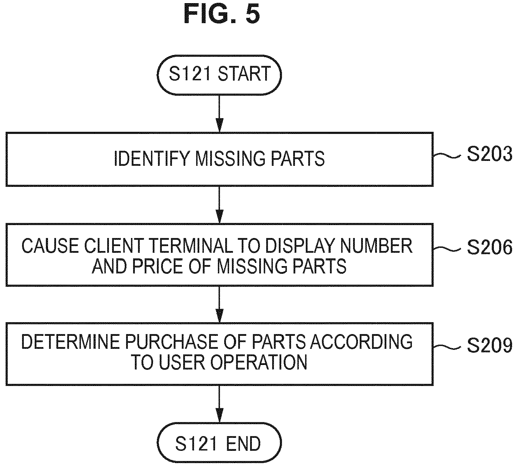

Next, if the selected robot is not creatable only with the user-owned parts (Step S118/No), the control unit 20 executes parts purchase processing (Step S121). The parts purchase processing will be described below in detail with reference to FIG. 5.

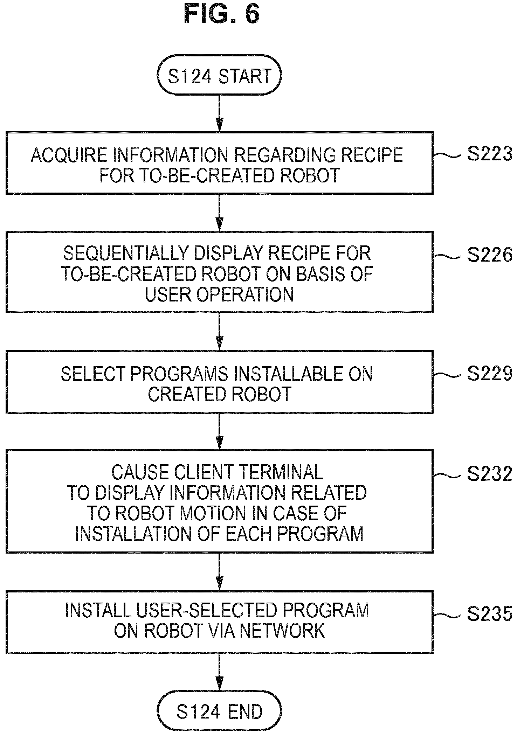

However, if the selected robot is creatable only with the user-owned parts (Step S124/Yes), the display information generation unit 203 executes assembly display processing (Step S124). The assembly display processing will be described below in detail with reference to FIG. 6.

### <3-2. Parts Purchase Processing>

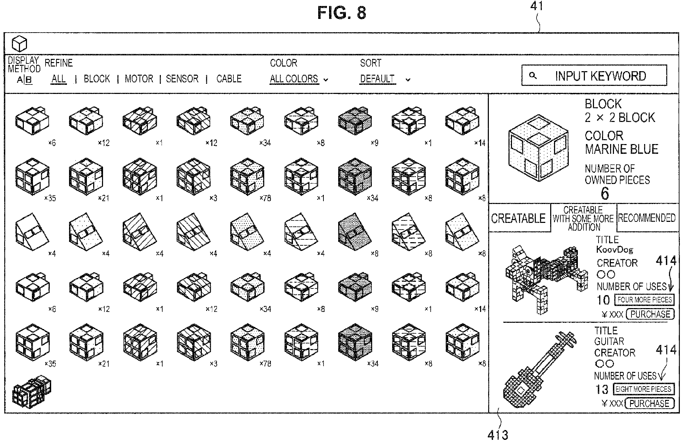

FIG. 5 is a flowchart of parts purchase processing according to this embodiment. As illustrated in FIG. 5, the control unit 20 in the server 2 identifies the missing parts to create the selected robot (Step S203). The control unit 20 transmits information regarding the number and price of the missing parts to the client terminal 1 and causes the client terminal 1 to display such information (Step S206). The missing parts are identified by checking information regarding the parts that constitute the selected robot against the information regarding user-owned-parts. An example of the display of the missing parts will be described below with reference to FIG. 8.

Next, the control unit 20 determines the purchase of the parts according to user operation (Step S209). When the purchase is determined, the display screen of the client terminal 1 is switched to the parts purchase screen, and missing-parts purchase processing is performed according to a predetermined procedure. When the user receives the purchased parts, the information regarding user-owned-parts is transmitted from the client terminal 1 again, and the processing in Step S103 and the subsequent processing illustrated in FIG. 4 are repeated.

### <3-3. Assembly Display Processing>

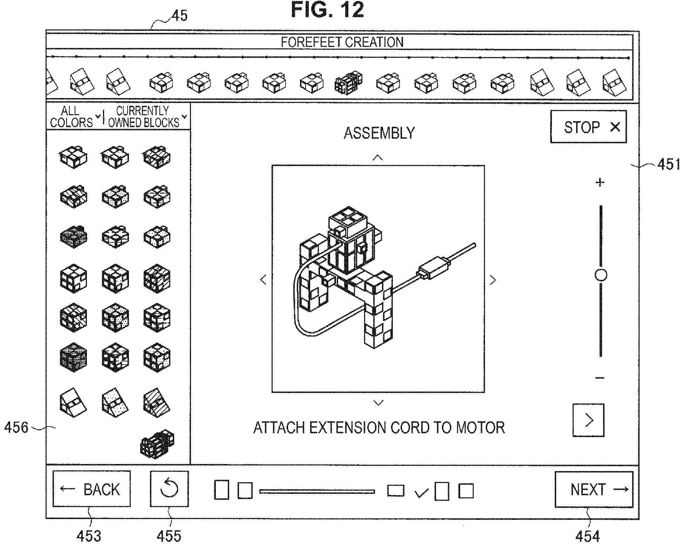

FIG. 6 is a flowchart of assembly display processing according to this embodiment. As illustrated in FIG. 6, the control unit 20 acquires information regarding the recipe for the to-be-created robot from the robot recipe database 22 (Step S223), and the recipe for the to-be-created robot is sequentially displayed on the basis of the user operation (Step S226). For example, the control unit 20 controls such that the assembly description screen is displayed on the display screen of the client terminal 1, and the subsequent assembly description screen is displayed when the user taps the "next" button or the like. A specific example of the assembly description screen for displaying the recipe will be described with reference to FIG. 12.

Next, the program selection unit 205 in the server 2 selects programs installable on the created robot (Step S229).

Next, the control unit 20 causes the display information generation unit 203 to generate motion display information for displaying information regarding robot motion obtained in the case of installation of each program selected by the program selection unit 205 and causes the output control unit 204 to output the motion display information to the client terminal 1 so that the client terminal 1 displays the motion display information (Step S232). This step allows the user to recognize in advance how the created robot moves for each program without actually installing programs on the robot and executing them.

Next, when the user selects one of the presented programs, the control unit 20 controls such that the selected program is installed on the robot 5 via the network 3 (Step S235). Specifically, for example, the control unit 20 causes the program selected by the user to be transmitted to the client terminal 1 via the network 3 and installed on the robot 5 connected to the client terminal 1.

### <<4. Example of Display Screen>>

Next, specific examples of various display screens displayed on the client terminal 1 according to this embodiment will be described in detail with reference to FIG. 7 to FIG. 14.

### <4-1. Example of Related-Robot Display Screen>

FIG. 7 is a view of an example display screen showing creatable robots presented according to the information regarding user-owned parts.

A screen 40 in FIG. 7 shows a menu bar 400, a user-owned-parts display image 401, a parts detail display image 402, and a creatable-robot display image 403. In the user-owned-parts display image 401, the images of the user-owned parts are organized by type, and the number of each type of part owned by the user is indicated by the numeral (e.g., "× 6") near the image of the part. The method for displaying the parts is not limited to this method and, for example, can be switched with "display method A/B" in the menu bar 400 on the upper part of the screen. For example, the "display method B" is a display method in which one part image is displayed for each type and the number of each type of part owned by the user is indicated by the numeral as illustrated in the figure. The "display method A" is a display method in which the images of parts owned by the user are displayed as many as the user owns.

The menu bar 400 includes display method, refine, color, sort, and keyword input box. The "display method" is intended to switch the display of the user-owned-parts display image 401 as described above. The "refine" is intended to refine the parts information displayed in the user-owned-parts display image 401. The "all" is selected in the illustrated example, but otherwise the display for each category of parts, such as "block", "motor", "sensor", or "cable", can be selected. The "color" is intended to refine the parts information to be displayed in the user-owned-parts display image 401 by color of parts and cause the refined parts information to be displayed in the user-owned-parts display image 401. The "all colors" is selected in the illustrated example, but otherwise a color, such as "white", "blue", "yellow", "red", "orange", "black", "gray", or "green", can be selected. The "sort" is intended to instruct the order of pieces of the parts-information displayed in the user-owned-parts display image 401. The "default" is selected in the illustrated example, but otherwise, for example, "in order of number of parts" or "in order of latest parts" can be selected. The keyword input box is a space for the user to input a keyword to be searched in the page. For example, the user can search parts by inputting the name and color of parts, or can search robot information by inputting the name or creator of robots.

The parts detail display image 402 includes the detailed parts information (i.e., name, color, number of owned parts).

The creatable-robot display image 403 includes information regarding robots that are creatable only with the user-owned parts and selected by the robot selection unit 202 in the server 2 on the basis of the information regarding user-owned parts. A plurality of pieces of robot information may be displayed. The order of robots in the display of a plurality of pieces of robot information is determined on the basis of, for example, the type, intended use, or price of robot, the number of parts used in robots, or the difficulty of robot creation.

The information regarding creatable robots includes information regarding the robot complete image, the title of robot, the creator of the robot, the number of uses (the number of users). The user can freely select a robot to be created from the presented robot candidates. It is thus convenient for the user to easily recognize which robot is creatable in the case of many parts owned by the user.

FIG. 8 is a view of an example display screen showing robots that are creatable with addition of some parts and presented in accordance with the information regarding user-owned parts. The screen 41 illustrated in FIG. 8 includes the robot display image 413 displayed when the tab "creatable with some more addition" is selected.

The robot display image 413 includes information regarding robots that have parts constitutions similar to robots that are creatable only with the user-owned parts and selected by the robot selection unit 202 in the server 2 on the basis of the information regarding user-owned parts. A plurality of pieces of robot information may be displayed. The order of robots in the display of a plurality of pieces of robot information is determined on the basis of, for example, the type, intended use, or price of robot, the number of parts used in robots, or the difficulty of robot creation.

The robot information includes the robot complete image, the title of robot, the creator of the robot, the number of uses, and missing parts information 414. The missing parts information 414 is information regarding missing parts to create the robot and includes the number and price of parts, and the purchase button. In the example illustrated in FIG. 8, for example, four parts are found to be missing to create a dog robot. The user taps the purchase button to purchase missing parts. When the purchase button is tapped, the purchase of missing parts are determined on the server 2 side, and the display screen is switched to the purchase screen (not shown) for purchasing missing parts. Since the user thus recognizes how many parts need to be purchased to create robots, the user can select a given robot in consideration of the missing parts information 414.

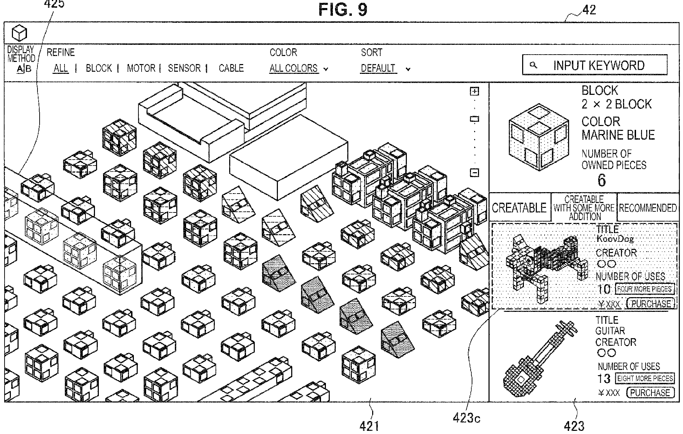

FIG. 9 is a view of an example display screen showing information related to parts for use in the selected robot. As illustrated in FIG. 9, a screen 42 displays a parts display image 421, which shows the parts used for the selected robot. In the illustrated example, the parts needed to create a robot 423a, which is creatable with addition of some parts are displayed. In this case, the missing parts are surrounded by a frame 425, and the frame 425 may be used as a flow line to the purchase screen.

Here, the parts used in the selected robot may be displayed separate from the remaining parts owned by the user.

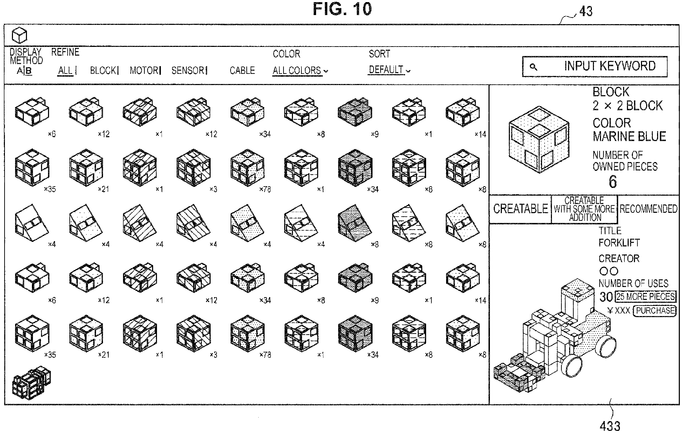

FIG. 10 is a view of an example display screen showing a recommended robot presented in accordance with the information regarding user-owned parts. The screen 43 illustrated in FIG. 10 includes a robot display image 433 displayed when the tab "recommended" is selected.

The robot display image 433 includes information regarding the robot recommended to the user and selected by the robot selection unit 202 in the server 2. The robot selection unit 202 selects, for example, a robot that meets the user's preference on the basis of the creation history (the type and intended use of the created robots) of the user, the robot selection history, or the like, or selects a popular robot (created by many users) or the latest robot (registered on the latest date). A plurality of pieces of robot information may be displayed. The order of robots in the display of a plurality of pieces of robot information is determined on the basis of, for example, the type, intended use, or price of robot, the number of parts used in robots, or the difficulty of robot creation.

The robot information includes the robot complete image, the title of robot, the creator of the robot, the number of uses, and the missing parts information.

Examples of related robots presented according to the information regarding user-owned parts are described above in detail. The related robot presented to the user is not limited to the above-described example. For example, the server 2 in cooperation with a social networking service (SNS) may present and recommend the same robot as the robot created by a user's friend or may present and recommend a robot that makes a set with the robot created by a friend. In addition, in consideration of information regarding friend-owned parts, the server 2 may present a robot that can be created with a combination of user-owned parts and friend-owned parts.

In addition, on the basis of the creation history of the user, the server 2 may recommend a robot that can be created by modification of part of the created robot or may recommend a robot that makes a set with the created robot.

### <4-2. Example of Assembly Procedure Screen>

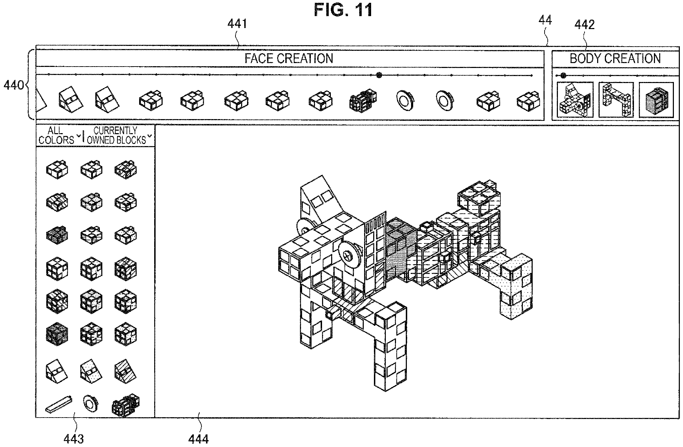

Next, an example screen showing the procedure (recipe information) for assembling the robot that is selected by the user from the presented robots and determined to be created will be described with reference to FIG. 11 to FIG. 12.

FIG. 11 is a view of an example grouping display screen showing robot constituent parts according to this embodiment. The screen 44 in FIG. 11 displays a parts chronological order display image 440, a parts display image 443, and a robot complete image 444. In the parts chronological order display image 440, the parts used for assembly of the robot are arranged. As a result, the user can intuitively understand which part is assembled in what order. In addition, the parts chronological order display is scrolled according to user operation, and the user thus can see the chronological order display of the parts being assembled by the user, the chronological order display of the already assembled parts, and the chronological order display of parts to be assembled.

Moreover, the chronologically arranged and displayed parts may be grouped by robot body part (e.g., face, body, foot). For example, in the example illustrated in FIG. 11, a parts chronological order display 441 in the creation of the robot face is shown, and the "face creation" is displayed as a process name. In addition, the parts chronological order display image 440 includes a body parts chronological order display image 442 in the creation of the robot body, adjacent to the parts chronological order display 441.

The parts display image 443 includes the currently owned parts, the parts (constituent parts) used for robot creation, and the like. The parts to be displayed can also be refined by type or color.

The robot complete image 444 displays the image of the complete robot. When the display of assembly description is instructed, such as when the parts chronological order display image 440 is tapped, an assembly description image as described below is displayed.

FIG. 12 is a view of an example display screen showing images for describing robot assembly according to this embodiment. The screen 45 in FIG. 12 displays a parts chronological order display image 450, an assembly description image 451, a parts display image 456, and a tool bar 452. In the parts chronological order display image 450, the parts used for assembly of the robot are arranged in order of assembly, as described above.

The assembly description image 451 is a static image or a moving image, and describes the parts assembly procedure using a diagram and characters. In addition, description may be given by voice in combination. The user assembles available parts according to the assembly description image 451.

The tool bar 452 includes action execution buttons for the assembly description image 451. For example, the parts assembly description image in the previous step is displayed upon tapping of a "back" button 453. In addition, the parts assembly description image in the next step is displayed upon tapping of a "next" button 454. Moreover, in the case where the assembly description image 451 is a moving image, the assembly description image 451 is played again upon tapping of a repeat button 455.

The parts display image 456 includes the currently owned parts, the parts (constituent parts) used for robot creation, and the like. Here, the parts currently used (used for robot creation) may be displayed separate from the remaining parts.

### <4-3. Example of Program Installation Screen>

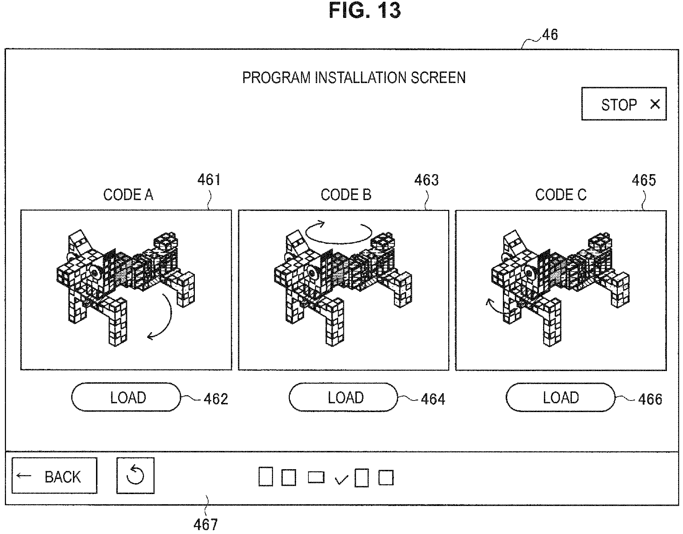

Next, an example screen display in installing programs on the created robot will be described with reference to FIG. 13. FIG. 13 is a view of an example screen display for program installation according to this embodiment.

The screen 46 in FIG. 13 displays program names together with the corresponding motion display images 461, 463, and 465. The motion display images 461, 463, and 465 may be static images or moving images. In addition, the motion display images 461, 463, and 465 are images including a characteristic motion of the robot on which the program has been installed. These images allow the user to recognize in advance how the created robot moves for each program without actually installing programs on the robot and executing them.

For example, the motion display image 461 corresponding to the code A shows the motion of the dog robot sitting down in response to the action (gesture) or voice of the user. Furthermore, the motion display image 463 corresponding to the code B shows the motion of the dog robot turning on the spot in response to the action (gesture) or voice of the user. Furthermore, the motion display image 465 corresponding to the code C shows the motion of the dog robot raising a paw in response to the action (gesture) or voice of the user.

Load buttons 462, 464, and 466, which are used to execute installation, are displayed under the motion display images 461, 463, and 465, respectively. The user selects a given program and taps the corresponding load button to instruct the installation of the program on the robot. The program is transmitted from the server 2, for example, through the client terminal 1 in a wired or wireless manner.

Here, it is also possible to select a robot character and install the corresponding program. For example, in the case where there are programs that cause the robot to behave according to its character, such as naive, active, or cool, the icons (e.g., face icons) showing characters are displayed, and the user selects a given character and taps the corresponding icon to instruct installation of the corresponding program.

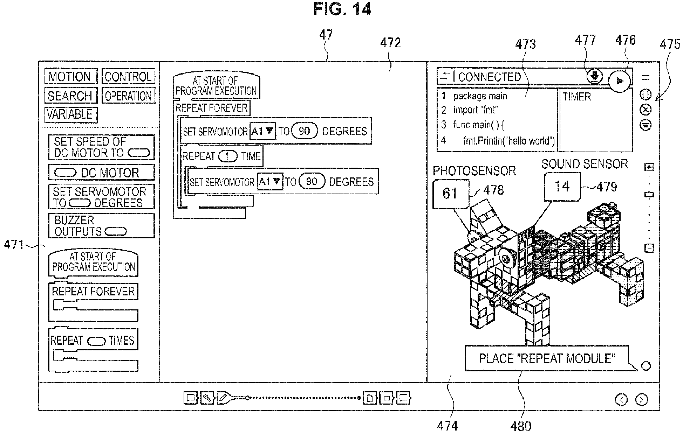

Here, this embodiment allows, in addition to the installation of an already created program as described above, the installation of a unique program that the user produces by freely creating and editing a program. Hereinafter, specific description will be given with reference to FIG. 14.

FIG. 14 is a view of an example screen display for programming according to this embodiment. The screen 47 in FIG. 14 displays a module display image 471, which visually shows a programming language, a workspace screen 472, on which a program is assembled and edited, a high-level language display screen 473, which is correlated with the workspace screen 472, and a robot display image 474.

The user selects given modules from modules obtained by visualization of the programming language displayed in the module display image 471 and drops and drugs the selected modules to the workspace screen 472. The program can thus be created only by assembly of the modules obtained by visualization of the programming language. The numerical values in the modules displayed on the workspace screen 472 can freely be set by the user. Note that the numerical values may be set to default values at first.

On the high-level language display screen 473, the program currently being assembled on the workspace screen 472 is described in a high-level language and changes in real time according to the program editing work on the workspace screen 472. In addition, the user can directly edit the program that is described in a high-level language and displayed on the high-level language display screen 473. In this case, the user can use existing code, variable, and sensor values by tapping the icons of the code, variable, and sensor values displayed in the icon image 475. In addition, a play button 476 is a button used to execute the created program. Upon tapping of the play button 476, for example, the robot displayed in the robot display image 474 moves according to the program. Alternatively, the server 2 controls such that the robot 5, which is placed in a real space and connected to the client terminal 1 via Bluetooth or the like, moves according to the program. In this case, the control can be performed without installing the program on the robot 5. Moreover, the user taps an installation button 477 to install the program on the robot 5.

The image of the created robot 5 is displayed in the robot display image 474. The sensor values 478 and 479 are values detected by the sensors installed in the real robot 5 connected to the client terminal 1. The sensor values 478 and 479 are dynamically displayed in real time. The user can create the program in consideration of actual sensor values. In addition, the hint information 480 for programming or the like is displayed in the lower right part of the screen.

### <<5. Conclusion>>

As described above, the information processing system according to the embodiment of the present disclosure enables the user to recognize in advance how the created robot moves for each application.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, computer programs for causing hardware to exert the function of the client terminal 1, the server 2, or the robot 5 can be created. Examples of the hardware include a central processing unit (CPU), a read only memory (ROM), and a random access memory (RAM), which are installed in the client terminal 1, the server 2, or the robot 5. In addition, a computer-readable storage medium that stores the computer program is also provided.

Here, the system configuration including the client terminal 1 and the server 2 is used as an example in the above-described embodiment, but this embodiment is not limited to this system configuration. At least part of the processing performed by the server 2 can be executed by the client terminal 1. For example, the client terminal 1 can perform parts information acquisition processing, robot selection processing, display information generation processing, program selection processing, and power control processing. The database on robot recipes and programs may be stored in the client terminal 1 or may be stored in an external device that can be connected as needed.

Further, the effects described in this specification are merely illustrative or exemplified effects, and are not limitative. That is, with or in the place of the above effects, the technology according to the present disclosure may achieve other effects that are clear to those skilled in the art from the description of this specification.

### Reference Signs List

- 1: client terminal
- 10: control unit
- 11: communication unit
- 12: operation input unit
- 13: voice input unit
- 14: display unit
- 15: voice output unit
- 16: storage unit
- 2: server
- 20: control unit
- 201: parts information acquisition unit
- 202: robot selection unit
- 203: display information generation unit
- 204: output control unit
- 205: program selection unit
- 21: communication unit
- 22: robot recipe database
- 23: program database
- 3: network

## Claims

1. An information processing apparatus (2) comprising
a control unit (20) that
generates robot display information for displaying information related to a robot (5) to be created by assembly of a plurality of parts,
selects a plurality of programs installable on the robot (5),
generates motion display information for displaying information related to motion of the robot (5) in a case of installation of the plurality of programs on the robot (5), and
performs control such that the motion display information is output.

2. The information processing apparatus (2) according to claim 1, wherein the information related to motion of the robot (5) includes a static image of the robot (5).

3. The information processing apparatus (2) according to claim 1, wherein the information related to motion of the robot (5) includes a moving image of the robot (5).

4. The information processing apparatus (2) according to claim 1, wherein the information related to motion of the robot (5) includes characteristic motion of the robot (5) on which the programs have been installed.

5. The information processing apparatus (2) according to claim 1, wherein the control unit (20) performs control such that a program corresponding to the motion display information selected by a user is transmitted to a robot (5) created by the user.

6. The information processing apparatus (2) according to claim 1, wherein the control unit (20) generates the robot display information on a basis of information regarding parts that constitute the robot (5) and information regarding user-owned parts.

7. The information processing apparatus (2) according to claim 6, wherein the control unit (20) generates robot display information for displaying information related to a robot (5) that is creatable only with the user-owned parts, or information related to a robot (5) having a structure similar to a structure that is creatable only with the user-owned parts.

8. The information processing apparatus (2) according to claim 7, wherein the control unit (20) performs control such that the number of parts additionally needed for robot creation is displayed, or such that price of a part additionally needed for robot creation is displayed.

9. The information processing apparatus (2) according to claim 6, wherein the control unit (20) generates robot display information for displaying information related to a robot (5) recommended to a user.

10. The information processing apparatus (2) according to claim 6, wherein the control unit (20) generates and outputs a plurality of pieces of the robot display information and generates assembly display information for displaying information related to assembly of one robot (5) selected by a user.

11. The information processing apparatus (2) according to claim 10, wherein the control unit (20) chronologically displays parts used for robot creation on a basis of the information related to assembly of the robot (5).

12. The information processing apparatus (2) according to claim 10, wherein the control unit (20) displays parts used for robot creation in groups by predetermined unit on a basis of the information related to assembly of the robot (5).

13. The information processing apparatus (2) according to claim 10, wherein assembly of group parts grouped by predetermined unit is displayed.

14. An information processing method comprising, by a processor:
generating robot display information for displaying information related to a robot (5) to be created by assembly of a plurality of parts;
selecting a plurality of programs installable on the robot (5);
generating motion display information for displaying information related to motion of the robot (5) in a case of installation of the plurality of programs on the robot (5); and
performing control such that the motion display information is output.

15. A program comprising instructions which, when executed by a computer, cause the computer to carry out the method of claim 14.

## Patentansprüche

1. Informationsverarbeitungsvorrichtung (2), umfassend:
eine Steuereinheit (20), die
Roboter-Anzeigeinformationen zum Anzeigen von Informationen bezüglich eines Roboters (5) erzeugt, der durch Montage einer Mehrzahl von Teilen gebildet werden soll,
eine Mehrzahl von Programmen auswählt, die auf dem Roboter (5) installiert werden kann, und Bewegungsanzeigeinformationen zum Anzeigen von Informationen bezüglich Bewegung des Roboters (5) im Falle einer Installation der Mehrzahl von Programmen auf dem Roboter (5) erzeugt, und
Steuerung derart durchführt, dass die Bewegungsanzeigeinformationen ausgegeben werden.

2. Informationsverarbeitungsvorrichtung (2) nach Anspruch 1, wobei die Informationen bezüglich Bewegung des Roboters (5) ein statisches Bild des Roboters (5) umfassen.

3. Informationsverarbeitungsvorrichtung (2) nach Anspruch 1, wobei die Informationen bezüglich Bewegung des Roboters (5) ein Bewegtbild des Roboters (5) umfassen.

4. Informationsverarbeitungsvorrichtung (2) nach Anspruch 1, wobei die Informationen bezüglich Bewegung des Roboters (5) eine charakteristische Bewegung des Roboters (5) umfassen, auf welchem die Programme installiert wurden.

5. Informationsverarbeitungsvorrichtung (2) nach Anspruch 1, wobei die Steuereinheit (20) Steuerung derart durchführt, dass ein Programm, das den Bewegungsanzeigeinformationen entspricht, die von einem Benutzer ausgewählt werden, an einen Roboter (5) gesendet werden, der vom Benutzer gebildet wird.

6. Informationsverarbeitungsvorrichtung (2) nach Anspruch 1, wobei die Steuereinheit (20) die Roboter-Anzeigeinformationen auf einer Basis von Informationen in Bezug auf Teile, die den Roboter (5) ausmachen, und Informationen in Bezug auf benutzereigene Teile erzeugt.

7. Informationsverarbeitungsvorrichtung (2) nach Anspruch 6, wobei die Steuereinheit (20) Roboter-Anzeigeinformationen zum Anzeigen von Informationen bezüglich eines Roboters (5), der nur mit den benutzereigenen Teilen gebildet werden kann, oder Informationen bezüglich eines Roboters (5) erzeugt, der eine ähnliche Struktur wie eine Struktur aufweist, die nur mit den benutzereigenen Teilen gebildet werden kann.

8. Informationsverarbeitungsvorrichtung (2) nach Anspruch 7, wobei die Steuereinheit (20) Steuerung derart durchführt, dass die Anzahl von Teilen angezeigt wird, die zur Roboterbildung zusätzlich benötigt wird, oder derart, dass ein Preis eines Teils angezeigt wird, das zur Roboterbildung zusätzlich benötigt wird.

9. Informationsverarbeitungsvorrichtung (2) nach Anspruch 6, wobei die Steuereinheit (20) Roboter-Anzeigeinformationen zum Anzeigen von Informationen bezüglich eines Roboters (5) erzeugt, der einem Benutzer empfohlen wird.

10. Informationsverarbeitungsvorrichtung (2) nach Anspruch 6, wobei die Steuereinheit (20) eine Mehrzahl von Elementen der Roboter-Anzeigeinformationen erzeugt und ausgibt und Montage-Anzeigeinformationen zum Anzeigen von Informationen bezüglich einer Montage eines Roboters (5) erzeugt, der von einem Benutzer ausgewählt wird.

11. Informationsverarbeitungsvorrichtung (2) nach Anspruch 10, wobei die Steuereinheit (20) Teile, die zur Roboterbildung verwendet werden, auf einer Basis der Informationen bezüglich der Montage des Roboters (5) chronologisch anzeigt.

12. Informationsverarbeitungsvorrichtung (2) nach Anspruch 10, wobei die Steuereinheit (20) Teile, die zur Roboterbildung verwendet werden, in Gruppen gemäß einer vorbestimmten Einheit auf einer Basis der Informationen bezüglich der Montage des Roboters (5) anzeigt.

13. Informationsverarbeitungsvorrichtung (2) nach Anspruch 10, wobei eine Montage von Gruppenteilen angezeigt wird, die gemäß einer vorbestimmten Einheit gruppiert sind.

14. Informationsverarbeitungsverfahren, umfassend durch einen Prozessor:
Erzeugen von Roboter-Anzeigeinformationen zum Anzeigen von Informationen bezüglich eines Roboters (5), der durch Montage einer Mehrzahl von Teilen gebildet werden soll, Auswählen einer Mehrzahl von Programmen, die auf dem Roboter (5) installiert werden kann;
Erzeugen von Bewegungsanzeigeinformationen zum Anzeigen von Informationen bezüglich Bewegung des Roboters (5) im Falle einer Installation der Mehrzahl von Programmen auf dem Roboter (5); und
Durchführen von Steuerung derart, dass die Bewegungsanzeigeinformationen ausgegeben werden.

15. Programm, umfassend Anweisungen, die bei Ausführung durch einen Computer den Computer zum Durchführen des Verfahrens nach Anspruch 14 veranlassen.

## Revendications

1. Appareil de traitement d'informations (2) comprenant
une unité de commande (20) qui
génère des informations d'affichage de robot pour afficher des informations relatives à un robot (5) à créer par l'assemblage d'une pluralité de pièces, sélectionne une pluralité de programmes pouvant être installés sur le robot (5),
génère des informations d'affichage de mouvement pour afficher des informations relatives à un mouvement du robot (5) dans un cas d'installation de la pluralité de programmes sur le robot (5), et
réalise une commande de telle sorte que les informations d'affichage de mouvement soient délivrées.

2. Appareil de traitement d'informations (2) selon la revendication 1, dans lequel les informations relatives à un mouvement du robot (5) comportent une image statique du robot (5).

3. Appareil de traitement d'informations (2) selon la revendication 1, dans lequel les informations relatives à un mouvement du robot (5) comportent une image animée du robot (5).

4. Appareil de traitement d'informations (2) selon la revendication 1, dans lequel les informations relatives à un mouvement du robot (5) comportent un mouvement caractéristique du robot (5) sur lequel les programmes ont été installés.

5. Appareil de traitement d'informations (2) selon la revendication 1, dans lequel l'unité de commande (20) réalise une commande de telle sorte qu'un programme correspondant aux informations d'affichage de mouvement sélectionnées par un utilisateur soit transmis à un robot (5) créé par l'utilisateur.

6. Appareil de traitement d'informations (2) selon la revendication 1, dans lequel l'unité de commande (20) génère les informations d'affichage de robot sur la base d'informations concernant des pièces qui constituent le robot (5) et d'informations concernant des pièces appartenant à l'utilisateur.

7. Appareil de traitement d'informations (2) selon la revendication 6, dans lequel l'unité de commande (20) génère des informations d'affichage de robot pour afficher des informations relatives à un robot (5) qui peut être créé uniquement avec les pièces appartenant à l'utilisateur, ou des informations relatives à un robot (5) ayant une structure semblable à une structure qui peut être créée uniquement avec les pièces appartenant à l'utilisateur.

8. Appareil de traitement d'informations (2) selon la revendication 7, dans lequel l'unité de commande (20) réalise une commande pour afficher le nombre de pièces requises en plus pour la création du robot, ou pour afficher le prix d'une pièce requise en plus pour la création du robot.

9. Appareil de traitement d'informations (2) selon la revendication 6, dans lequel l'unité de commande (20) génère des informations d'affichage de robot pour afficher des informations relatives à un robot (5) recommandé à un utilisateur.

10. Appareil de traitement d'informations (2) selon la revendication 6, dans lequel l'unité de commande (20) génère et délivre une pluralité d'éléments des informations d'affichage de robot et génère des informations d'affichage d'assemblage pour afficher des informations relatives à l'assemblage d'un robot (5) sélectionné par un utilisateur.

11. Appareil de traitement d'informations (2) selon la revendication 10, dans lequel l'unité de commande (20) affiche chronologiquement des pièces utilisées pour la création du robot sur la base des informations relatives à l'assemblage du robot (5).

12. Appareil de traitement d'informations (2) selon la revendication 10, dans lequel l'unité de commande (20) affiche des pièces utilisées pour la création du robot en groupes par unité prédéterminée sur la base des informations relatives à l'assemblage du robot (5).

13. Appareil de traitement d'informations (2) selon la revendication 10, dans lequel l'assemblage de pièces groupées par unité prédéterminée est affiché.

14. Procédé de traitement d'informations comprenant, par un processeur :
la génération d'informations d'affichage de robot pour afficher des informations relatives à un robot (5) à créer par l'assemblage d'une pluralité de pièces,
la sélection d'une pluralité de programmes pouvant être installés sur le robot (5),
la génération d'informations d'affichage de mouvement pour afficher des informations relatives à un mouvement du robot (5) dans un cas d'installation de la pluralité de programmes sur le robot (5), et
la réalisation d'une commande de telle sorte que les informations d'affichage de mouvement soient délivrées.

15. Programme comprenant des instructions qui, à leur exécution par un ordinateur, amènent l'ordinateur à mettre en œuvre le procédé selon la revendication 14.
